Europäisches Patentamt

European Patent Office

Office européen des brevets

(19)

(11) **EP 0 458 669 B1**

(12) **FASCICULE DE BREVET EUROPEEN**

(45) Date de publication et mention
de la délivrance du brevet:
**18.06.1997   Bulletin 1997/25**

(51) Int Cl.⁶: **G06K 9/68**, G01S 7/02

(21) Numéro de dépôt: **91401171.3**

(22) Date de dépôt: **03.05.1991**

(54) **Procédé de reconnaissance rapide d'objets susceptibles de faire partie d'une collection comportant un grand nombre d'objets à caractéristiques différentes**

Verfahren zur schnellen Erkennung von Gegenständen die zu einer eine grosse Menge von Gegenständen mit verschiedenen Merkmalen umfassenden Sammlung gehören können

Method for fast recognition of objects that may belong to a collection comprising a large number of objects with different caracteristics

(84) Etats contractants désignés:
**DE FR GB IT**

(30) Priorité:  **22.05.1990  FR 9006386**

(43) Date de publication de la demande:
**27.11.1991   Bulletin 1991/48**

(73) Titulaire: **THOMSON-CSF**
**75008 Paris (FR)**

(72) Inventeurs:
- **Fromenteau, Jean-Claude**
  **F-92045 Paris la Défense (FR)**
- **Riviere, Christian**
  **F-92045 Paris la Défense (FR)**

(74) Mandataire: **Chaverneff, Vladimir et al**
**THOMSON-CSF-S.C.P.I.,**
**13, Avenue du Président**
**Salvador Allende**
**94117 Arcueil Cédex (FR)**

(56) Documents cités:
**DE-A- 2 456 210          US-A- 4 040 011**

- **Proceedings of the IEEE 1989 National Aerospace and Electronics Conference NAECON 1989, Dayton, US, May 22 - 26, 1989, IEEE, US Vol. 2, pages 940 - 947 : G. F. Wilber et al.: "Intelligent Real-Time Electronic Warfare"**

**Description**

La présente invention se rapporte à un procédé de reconnaissance rapide d'objets susceptibles de faire partie d'une collection comportant un grand nombre d'objets à caractéristiques différentes.

L'identification d'objets de même type, de caractéristiques différentes, défilant rapidement et en grand nombre, devant un poste de contrôle, en vue par exemple de leur tri ultérieur, est généralement effectuée par un opérateur humain. Pour pouvoir automatiser une telle identification, il faut munir préalablement ces objets d'un marquage. Ce marquage peut par exemple être effectué à l'aide d'un code à barres, comme cela se fait déjà pour le tri du courrier. Pour effectuer un tel marquage par code à barres de façon rapide, donc pour pouvoir justifier l'automatisation du tri, il est nécessaire de procéder à une reconnaissance optique des caractères de l'adresse inscrite sur ce courrier. Cette reconnaissance optique présente de forts taux d'erreur si l'adresse est manuscrite.

On peut également munir les objets à identifier d'"étiquettes électroniques", mais ceci n'est pas toujours réalisable et peut être trop onéreux s'il s'agit d'un très grand nombre d'objets à trier.

Dans le cas où les objets à identifier se différencient par des caractéristiques physiques (dimensions, couleurs, poids, paramètres électriques tels que permittivité diélectrique, perméance (magnétique...ou paramètres optiques tels que réflectivité, opacité...), il est possible de faire appel à des systèmes experts de reconnaissance, mais lorsque ces caractéristiques physiques varient peu d'un objet à l'autre et/ou lorsque ces objets défilent rapidement et en grandes quantités, ces systèmes experts risquent d'être très complexes et onéreux.

Lorsque ces objets sont des radars, dont on a mesuré certains des paramètres techniques (fréquence d'émission, largeur d'impulsion, caractéristiques de balayage, ...), on est amené à comparer les résultats des mesures et d'analyse de leurs paramètres à une bibliothèque de caractéristiques. Cette bibliothèque contient une description des radars déjà identifiés (dont on connaît par d'autres moyens la description), et de leurs modes de fonctionnement.

Les procédés connus d'identification de radars se répartissent grossièrement en deux catégories principales. La première catégorie englobe des procédés de comparaison des grandeurs mesurées à des fourchettes (minimum, maximum) prévues en bibliothèque, et comparaison des paramètres discrets. Un procédé se rapportant à cette première catégorie est par exemple décrit dans le document US-A-4 040 011. Ce procédé est basé sur l'identification de signatures par comparaison de paramètres mémorisés en bibliothèque avec des paramètres significatifs sélectionnés de la signature analysée. La comparaison est effectuée uniquement en tenant compte de fourchettes de valeurs. De tels procédés nécessitent de réaliser préalablement des bibliothèques tenant compte à la fois des performances des capteurs ayant fourni les grandeurs mesurées, et des plages de variation des paramètres des radars. En outre, ces procédés excluent trop brutalement des modes, lorsque les comparaisons avec les valeurs des bibliothèques ne sont pas satisfaisantes, et ce, principalement pour les paramètres secondaires et surtout pour les paramètres discrets. De plus, ces procédés montrent peu de souplesse dans la pondération du caractère discriminant des différents paramètres. En outre, la numérisation du résultat est difficile, ce qui nuit aux performances : on ne peut pas interpréter le degré de confiance à accorder au résultat.

Les procédés connus de la seconde catégorie font appel à des systèmes experts puissants basés sur le principe d'enrichissement de la bibliothèque au fur et à mesure de l'acquisition de résultats de mesures. Ce procédé a une vitesse d'exécution très faible, et, il nécessite pour sa mise en oeuvre des mémoires de taille très importante qui peuvent l'exclure dans le cas de systèmes d'identification embarqués. Un procédé se rapportant à cette seconde catégorie est par exemple celui décrit dans le document : PROCEEDINGS OF THE IEEE NATIONAL AND ELECTRONICS CONFERENCE NAECON 1989, Dayton, US, 22-26 Mai 1989, vol. 2 ; pages 940-947, G. F. WILBER et al. : "Intelligent Real-Time Electronic Warfare". Ce procédé consiste essentiellement à comparer les mesures effectuées à des valeurs mémorisées et à attribuer un "niveau de confiance" à chaque identification. Si le niveau de confiance est estimé trop faible, on poursuit la mesure des caractéristiques des radars à identifier et la comparaison jusqu'à l'amélioration suffisante du niveau de confiance. Ce procédé connu présente l'inconvénient d'une lenteur de reconnaissance dans des conditions de mesure défavorables.

La présente invention a pour objet un procédé d'identification d'objets, qui soit simple à mettre en oeuvre et d'exécution rapide, qui fournisse des résultats indépendants des capteurs de mesure, qui s'adapte facilement à toutes les situations, et qui ne nécessite pas une quantité importante de mémoire.

L'invention concerne un procédé de reconnaissance rapide d'objets susceptibles de faire partie d'une collection comportant un grand nombre d'objets connus à caractéristiques différentes, consistant :

- à mesurer des paramètres représentant les caractéristiques principales de ces objets connus,
- à constituer une bibliothèque contenant les caractéristiques de ces objets connus,
- à mesurer les caractéristiques de chacun des objets à reconnaître,
- à comparer les caractéristiques ainsi mesurées des objets à reconnaître avec les caractéristiques mémorisées dans la bibliothèque en vue d'identifier chacun des objets à reconnaître, selon une procédure consistant à effectuer à l'aide d'un processeur les étapes suivantes :

- répartir en plusieurs familles les paramètres mesurés représentant les caractéristiques principales des objets connus,
- effectuer un premier tri grossier des familles de paramètres en tenant compte de l'ordre de grandeur des paramètres principaux des familles principales,
- éliminer dans chaque famille les solutions les moins vraisemblables par rapport aux caractéristiques mesurées des objets à reconnaître, et
- classer dans l'ordre de vraisemblance les solutions restantes pour retenir l'une au moins des plus vraisemblables,

et ce procédé est caractérisé par le fait que la vraisemblance est une vraisemblance globale qui est égale au produit des vraisemblances partielles relatives aux différentes familles de paramètres, une vraisemblance partielle $V_p$ étant donnée par :

$$V_p = \P_j \, (C(j)^{K(j)}) \, N(j)$$

où

"j" est l'index d'exploration des paramètres associés à la famille dont Vp est la vraisemblance,

C(j) est une grandeur qui traduit, lorsqu'elle se rapproche de l'unité, la proximité croissante du paramètre avec celui mémorisé dans une bibliothèque,

N(j) est un coefficient permettant de fixer le poids du paramètre "j" dans l'identification,

K(j) est un coefficient égal à 1 pour les valeurs de paramètres dont la précision est connue en pourcentage, et proportionnel à la valeur des paramètres lorsque leur précision est connue en absolu.

Le procédé d'identification de l'invention est décrit ci-dessous en référence à des radars impulsionnels, mais il est bien entendu qu'il s'applique également à des radars CW (à porteuse non modulée) dont l'identification est généralement plus simple à effectuer, et il est bien entendu que, de façon générale, il peut s'appliquer à des objets très divers dont on peut mesurer les caractéristiques à l'aide de capteurs appropriés.

Le procédé consiste tout d'abord à répartir les paramètres techniques mesurés en plusieurs familles. De façon avantageuse, ces familles sont au nombre de quatre. Dans ce cas, ces familles sont respectivement liées à la fréquence d'émission radar, à la largeur d'impulsion, à la modulation du temps d'arrivée et au balayage. Les deux premières familles précitées sont dites "primaires" du fait qu'elles sont relatives aux impulsions émises par les radars. Les deux autres familles sont dites "secondaires" parce qu'elles se rapportent à plusieurs impulsions. A titre d'exemple, la famille de paramètres "modulation" est composée des valeurs minimum et maximum observées, de la valeur la plus occurente, et du nombre de valeurs observées.

Chaque famille de paramètres est préalablement assortie d'une note traduisant l'estimation de la qualité de la mesure devant être exploitée, donc de la confiance que l'on peut raisonnablement lui accorder. La note représente une précision pour les paramètres primaires (paramètres à caractère quantitatif), et une notion de confiance plus subjective pour les paramètres secondaires (à caractère qualitatif).

Un paramètre technique est soit une caractéristique discrète, soit une grandeur physique. A titre d'exemple, la famille des paramètres décrivant le balayage est constituée du type de balayage (pointé, circulaire, sectoriel, ... ) d'une part, et de la période de rotation d'antenne et de la largeur du lobe d'autre part.

La première étape du procédé d'identification de l'invention est un tri grossier, équivalent à un passage dans un crible. Ce tri tient compte de l'ordre de grandeur des paramètres primaires de largeur d'impulsion et de fréquence, paramètres toujours mesurés avec une précision connue et dont l'ordre de grandeur est fiable, ces paramètres étant facilement discriminants.

Une première liste de radars possibles (dont les caractéristiques de largeur d'impulsion et de fréquence correspondent, dans une certaine fourchette de valeurs, aux caractéristiques mesurées) est ainsi retenue. On l'appelle "domaine de recherche". Cette liste contient des modes radar méritant d'être examinés, et tous les traitements subséquents ne porteront que sur ce domaine de recherche. Selon un exemple de réalisation, pour une bibliothèque comportant environ 4000 modes radar, ce domaine de recherche comporte généralement 80 à 100 modes au maximum, et, dans les cas les plus défavorables, environ 200 modes au maximum.

L'étape suivante consiste à examiner les paramètres techniques secondaires du radar mesuré et à positionner des indicateurs caractérisant le signal radar. Ces indicateurs sont positionnés lorsque l'on a détecté de façon quasi-certaine une caractéristique du radar mesuré. Par exemple pour ce qui est du balayage, on positionne un indicateur à une certaine valeur A s'il est du type circulaire à deux PRA (période de rotation de l'antenne), à une autre valeur B s'il est sectoriel à deux butées, à une troisième valeur C s'il est circulaire à une PRA, etc.

Une fois que tous les indicateurs que l'on est en mesure de positionner sont positionnés, le processus d'identification est commun pour l'examen de tout le domaine de recherche. Ainsi, par exemple, l'observation des paramètres de la famille "modulation" permet d'estimer la différence entre les valeurs d'écarts entre impulsions mesurées et la dispersion de ces valeurs, et on peut donc estimer s'il s'agit de modulation simple, de "stagger" de "jitter" de vobulation, de trains d'impulsions, ou de modulatlons multiples, etc.

Ensuite, en fonction des différents indicateurs précités, on calcule, pour chacun des modes du domaine de recherche, des variables que l'on appelle "vraisemblances". Ces variables qualifient la distance entre le mode examiné (mode faisant partie du domaine de recherche) et la mesure à identifier.

Les vraisemblances calculées sont de deux sortes : vraisemblances partielles portant chacune sur une famille de paramètres, et une vraisemblance globale portant sur l'ensemble des familles de paramètres. Ces familles de paramètres sont respectivement relatives à la fréquence, à la largeur d'impulsion, à la modulation et au balayage.

Pour chacune des vraisemblances, on détermine quatre (dans le cas présent) niveaux minimum de vraisemblance, selon le principe général suivant : plus d'indulgence (niveau minimum exigé faible) pour une famille de paramètres dont la mesure est mal notée, même si cela entraîne une plus grande exigence (niveau minimum exigé plus élevé) pour les autres familles.

On détermine donc, pour chaque mode du domaine de recherche les vraisemblances partielles des différentes familles de paramètres puis la vraisemblance globale. On retient en final s'ils existent, les modes (au nombre de quatre en pratique) issus du domaine de recherche présentant les meilleures vraisemblances globales et dont toutes les vraisemblances partielles sont supérieures aux niveaux minimaux exigés.

La vraisemblance globale (V(i) d'un mode radar (i) par rapport à la mesure à identifier est définie par la formule suivante :

$$V(i) = Vli(i) . Vf(i) . Vmod (i) . Vb(i)$$

dans laquelle Vli(i), Vf(i), Vmod(i) . Vb(i) sont respectivement les vraisemblances partielles de chacune des familles de paramètres techniques relatives à la largeur d'impulsions, à la fréquence, à la modulation et au balayage.

Les vraisemblances partielles Vp sont des nombres réels compris 0 et 1 et décrits par la formule générale :

$$V_p = \P_j \, (C(j)^{K(j)}) \, N(j)$$

dans laquelle:

"j" est l'index d'exploration des paramètres associés à la famille dont Vp est la vraisemblance. Par exemple, la famille de paramètres "fréquence" se compose de la mesure la plus occurente, du nombre de valeurs observées, et des valeurs minimale et maximale de la fréquence (j varie donc de 1 à 4 dans le cas présent) ,

C(j) est une grandeur qui traduit, lorsqu'elle se rapproche de l'unité, la proximité croissante du paramètre analysé avec celui du mode mémorisé dans la bibliothèque,

N(j) est un coefficient permettant de fixer le poids du paramètre "j" dans l'identification. Le poids augmente lorsque N(j) augmente, et N(j) dépend du caractère discriminant de la mesure,

K(j) est un coefficient égal à 1 pour les valeurs de paramètres dont la précision est connue en pourcentage, et proportionnel à la valeur des paramètres lorsque leur précision est connue en valeur absolue. Ainsi, par exemple, si on mesure une fréquence F de 5000 MHz, et que la fréquence des modes de la bibliothèque la plus proche est 5020 MHz, on a :

$$C(j) = \frac{5000}{5020} = 0,996$$

C(j) étant défini ci-dessous

$$K(j) = F \ (F \ en \ GHz) = 5$$

$$d'où \ C(j)^{K(j)} = 0,996^5 = 0,98$$

Et si la fréquence mesurée était de 10 000 MHz et celle en bibliothèque était de 10 020 MHz, on aurait :

$$C(j)^{K(j)} = 0{,}998^{10} = 0{,}98$$

On déduit de cet exemple que 20 MHz d'écart sont aussi discriminants à 5000 MHz qu'à 10.000 MHz, ce qui est cohérent avec le fait que la fréquence se caractérise avec une précision absolue.

La formule de Vp donnée ci-dessus, et en particulier la liste des paramètres (j), dépend de l'examen préalable de la mesure en ce qui concerne les paramètres secondaires. Ainsi, par exemple dans le cas de la modulation, la formule de Vmod (Vp relative à la modulation) pourra être différente selon le cas ("stagger", "jitter", vobulation, ...) en fonction de la signification et de la confiance accordées à la détermination des différents paramètres relatifs à cette famille. De plus, le type de modulation devient un paramètre à part entière qui est donné, explicitement ou implicitement, pour chaque mode de la bibliothèque.

La formule de Vp dépend aussi de la mesure. Par exemple, en ce qui concerne le balayage, selon qu'il est pointé, sectoriel ou circulaire, interviennent respectivement : le type de balayage seul, le type de balayage et la période de rotation de l'antenne, ou bien le type de balayage et la période de rotation et la largeur de lobe.

Le coefficient C(j) est obtenu, selon le type de la grandeur j traitée, de la manière suivante :

a) comparaison d'un paramètre qualitatif ou discret :

$$Cqual(j) = 1 \text{ s'il y a correspondance, sinon } Cqual(j) < 1$$

b) proximité d'une mesure (M) de paramètre à une valeur en bibliothèque (VB) :

$$Cvv(j) = \inf \left( \frac{M}{VB}, \frac{VB}{M} \right)$$

c) proximité d'une mesure (M) de paramètre à une gamme possible de la bibliothèque (VBmin, VB max) :

$$Cvf(j) = \inf \left( \frac{M}{VBmin}, \frac{VBmax}{M}, 1 \right)$$

d) proximité des valeurs mesurées extrêmes (Mmin, Mmax) de paramètres à une gamme possible de la bibliothèque (VBmin, VBmax) :

$$Cff(j) = \inf \left( \frac{Mmin}{VBmin}, \frac{VBmax}{Mmax}, 1 \right)$$

On notera que, s'il est nécessaire d'optimiser le temps d'exécution, on peut remplacer $(Cj^{K(j)})$ N(j) par 1-K(j).N(j) + C(j) . K(j) . N(j), soit a. C(j) + b puisque K(j) et N(j) sont indépendants des modes observés. Dans le cas le plus défavorable, K(j) est proportionnel à la mesure s'il n'est pas égal à 1. Cette approximation est possible puisque les valeurs les plus intéressantes pour C(j) sont voisines de 1 (vraisemblance la meilleure possible). Elle est souhaitable dans le cas de paramètres peu discriminants (N(j) faible), car elle ne tend pas vers zéro.

Les vraisemblances, partielles puis globales, sont calculées pour chacun des modes du domaine de recherche et sont comparées aux vraisemblances minimales exigées. Les modes ne respectant pas ces niveaux minimaux sont rejetés, éventuellement sans être examinés totalement. En effet, selon une caractéristique avantageuse de l'invention, lorsqu'un mode dépasse le seuil minimum de vraisemblance globale, de façon significative, on ré-évalue ce seuil pour l'examen des modes suivants. Cette caractéristique procure un gain de temps important, puisque statistiquement, ces modes suivants sont plus vite rejetés au cas où ils doivent l'être.

On effectue ensuite un classement final pour rechercher le mode présentant la meilleure vraisemblance globale. Si plusieurs modes (quatre au plus) ont des vraisemblances globales très proches, le résultat se compose de ces différents modes.

Le procédé décrit ci-dessus peut être mis en oeuvre dans un système de reconnaissance en étant traduit en un algorithme constituant le programme de travail d'un processeur. Ce programme peut être écrit en un langage tel que le langage C ou en langage XRET (dédié aux systèmes experts) compilé en C, ou en tout autre langage approprié. Bien entendu, il est nécessaire, lors de la mise au point du système de reconnaissance, d'ajuster correctement pour tous les coefficients N(j), donc pour chaque paramètre, les caractères discriminants, tout en égalisant les "poids" relatifs des quatre vraisemblances partielles. De façon avantageuse, on a pu fixer a priori, pour ces quatre vraisemblances partielles, les correspondances entre les valeurs de vraisemblance (exprimées ici en pourcentage) et les notions intuitives de vraisemblance.

95 % à 100 % : certain
89 % à 95 % : possible
83 % à 89 % : douteux

Dans le cas présent, ces correspondances ont été déterminées pour la famille de paramètres la plus simple : la largeur d'impulsion, et imposées pour les autres familles, c'est-à-dire que l'ensemble des coefficients N(j) des paramètres de ces familles ont été déterminés en tenant compte des valeurs ci-dessus.

Pour déterminer le domaine de recherche, on procède par unions et intersections d'ensembles appelés "cribles" et qui sont fixés au préalable. Un premier crible représente l'ensemble dont les fréquences sont du même ordre de grandeur. Un autre crible est relatif aux modes dont les largeurs d'impulsion sont du même ordre de grandeur.

Ainsi, par exemple, la plage totale de fréquence est découpée en une vingtaine de segments "équidenses", (comportant chacun sensiblement le même nombre de fréquences possibles), et la plage de largeurs d'impulsion en une quinzaine de segments "équidenses". Dans ces deux cas, un mode mesuré peut éventuellement appartenir à plusieurs segments. Bien entendu, ces découpages en segments ne sont pas faits au hasard, mais sont basés sur une bonne connaissance a priori des radars.

Pour les deux paramètres primaires, fréquence et largeur d'impulsion, une mesure comporte une ou plusieurs valeurs constituant un intervalle. Le cas échéant (une seule valeur), le minimum de l'intervalle est égal au maximum. Cet intervalle doit ensuite être élargi pour tenir compte de la précision des mesures : précision intrinsèque du capteur, ou ponctuelle dans le cas d'une note faible. Le procédé consiste alors à effectuer l'union des cribles ayant une intersection non vide avec cet intervalle, pour ces deux paramètres primaires. L'intersection du résultat relatif à la fréquence et du résultat relatif à la largeur d'impulsion donne le domaine de recherche. En général, l'intervalle issu de la mesure ne couvre qu'un crible, ce qui est, bien entendu, l'objectif du procédé.

En pratique, un crible est une liste d'informations binaires, ce qui permet de traiter les modes par gros paquets (par exemple par paquets de 32 pour un processeur 32 bits) lors des opérations d'unions et d'intersections d'ensembles, à l'aide d'instructions logiques ET et OU du processeur. On peut ainsi déterminer le domaine de recherche en un temps très court (quelques millisecondes par exemple). Le domaine de recherche ne contient généralement qu'un sous-ensemble restreint de modes à examiner par rapport à l'ensemble des modes de la bibliothèque (0,5 % à 10 % en général), ce qui diminue corrélativement le temps d'exécution des opérations subséquentes de détermination des vraisemblances.

Du fait que le procédé de l'invention permet de fixer des niveaux minimaux de vraisemblance, et surtout du fait qu'il permet de faire évoluer dynamiquement le seuil de vraisemblance globale, il permet un gain de temps important : un grand nombre de modes peuvent être abandonnés au fur et à mesure du relèvement du seuil, avant d'être examinés complètement. Dans certains cas, ce gain de temps peut être supérieur à 50 %.

Les paramètres C(j) traduisent une proximité et non un éloignement. Ils sont, par définition, compris entre 0 et 1. Ils peuvent donc être programmés à l'aide de variables entières ("integer" en Anglais) sans risque de dépassement ("overflow" en Anglais).

A titre d'exemple, le coefficient Cvv (coefficient C(j) correspondant à la proximité d'une mesure à une valeur de la bibliothèque), se programme en langage C de la façon suivante :

# define Cvv (a,b) ((a > b) ? ((b << 14) /a : ((a << 14) / b))

le résultat variant de 0 à 0 x 4000. On pourrait simplifier la programmation dans un langage de programmation possédant le type "virgule fixe". Un tel calcul peut être fait en quelques microsecondes avec un microordinateur classique actuel (à processeur du type 386 ou 68 020).

Pour une bibliothèque décrivant 4000 modes radar, l'identification d'une mesure complète (c'est-à-dire pour laquelle on dispose des quatre familles de paramètres effectivement mesurés) peut généralement prendre un temps compris entre 15 et 100 millisecondes environ, selon l'ordre de grandeur des paramètres mesurés, et ce, avec un microordinateur à processeur 68020, programmé en langage C. Bien entendu, pour accélérer le traitement, on peut faire travailler plusieurs processeurs en parallèle.

**Revendications**

1. Procédé de reconnaissance rapide d'objets susceptibles de faire partie d'une collection comportant un grand nombre d'objets connus à caractéristiques différentes, consistant

- à mesurer des paramètres représentant les caractéristiques principales de ces objets connus,
- à constituer une bibliothèque contenant les caractéristiques de ces objets connus,
- à mesurer les caractéristiques de chacun des objets à reconnaître,
- à comparer les caractéristiques ainsi mesurées des objets à reconnaître avec les caractéristiques mémorisées dans la bibliothèque en vue d'identifier chacun des objets à reconnaître, selon une procédure consistant à effectuer à l'aide d'un processeur les étapes suivantes :
- répartir en plusieurs familles les paramètres mesurés représentant les caractéristiques principales des objets connus,
- effectuer un premier tri grossier des familles de paramètres en tenant compte de l'ordre de grandeur des paramètres principaux des familles principales,
- éliminer dans chaque famille les solutions les moins vraisemblables par rapport aux caractéristiques mesurées des objets à reconnaître, et
- classer dans l'ordre de vraisemblance les solutions restantes pour retenir l'une au moins des plus vraisemblables,

caractérisé par le fait que la vraisemblance est une vraisemblance globale qui est égale au produit des vraisemblances partielles relatives aux différentes familles de paramètres, une vraisemblance partielle $V_p$ étant donnée par :

$$V_p = \P_j \, (C(j)^{K(j)}) \, N(j)$$

où

"j" est l'index d'exploration des paramètres associés à la famille dont Vp est la vraisemblance,
C(j) est une grandeur qui traduit, lorsqu'elle se rapproche de l'unité, la proximité croissante du paramètre avec celui mémorisé dans une bibliothèque,
N(j) est un coefficient permettant de fixer le poids du paramètre "j" dans l'identification,
K(j) est un coefficient égal à 1 pour les valeurs de paramètres dont la précision est connue en pourcentage, et proportionnel à la valeur des paramètres lorsque leur précision est connue en absolu.

2. Procédé selon la revendication 1 caractérisé par le fait que, pour la comparaison d'un paramètre qualitatif ou discret, le coefficient C(j) est égal à 1 s'il y a correspondance, sinon il est inférieur à 1.

3. Procédé selon la revendication 1 caractérisé par le fait que, dans le cas de la proximité d'une mesure M de paramètre à une valeur en bibliothèque VB, le coefficient C(j) est égal à

$$\inf \left( \frac{M}{VB}, \frac{VB}{M} \right)$$

4. Procédé selon la revendication 1 caractérisé par le fait que, dans le cas de la proximité d'une mesure M de paramètre à une gamme possible d'une bibliothèque VBmin, VBmax, le coefficient C(j) est égal à

$$\inf \left( \frac{M}{VBmin}, \frac{VBmax}{M}, 1 \right)$$

5. Procédé selon la revendication 1 caractérisé par le fait que, dans le cas de la proximité des valeurs mesurées extrêmes Mmin, Mmax de paramètres à une gamme possible d'une bibliothèque VBmin, VBmax, le coefficient C(j) est égal à

$$\inf \left( \frac{Mmin}{VBmin}, \frac{VBmax}{Mmax}, 1 \right)$$

6. Procédé selon l'une des revendications précédentes, caractérise par le fait que lorsqu'un paramètre examiné dépasse un seuil prédéterminé de vraisemblance globale de façon significative, on rehausse ce seuil pour l'examen des paramètres suivants.

7. Procédé selon l'une des revendications précédentes, pour la reconnaissance de radars, caractérisé par le fait que les familles de paramètres sont au nombre de quatre et sont respectivement relatives à la fréquence, à la largeur d'impulsion, à la modulation du temps d'arrivée, et au balayage.

**Patentansprüche**

1. Verfahren zum schnellen Erkennen von Gegenständen, die Teil einer Menge bilden können, die eine große Anzahl von bekannten Gegenständen mit unterschiedlichen Eigenschaften enthält, darin bestehend, daß

   - die Parameter gemessen werden, die die Haupteigenschaften dieser bekannten Gegenstände repräsentieren,
   - eine Bibliothek gebildet wird, die die Eigenschaften dieser bekannten Gegenstände enthält,
   - die Eigenschaften jedes der zu erkennenden Gegenstände gemessen werden,
   - die so gemessenen Eigenschaften der zu erkennenden Gegenstände mit den in der Bibliothek gespeicherten Eigenschaften verglichen werden, um jeden der zu erkennenden Gegenstände gemäß einer Prozedur zu identifizieren, die darin besteht, mit Hilfe eines Prozessors die folgenden Stufen auszuführen:
   - Aufteilen der gemessenen Parameter, die die Haupteigenschaften der bekannten Gegenstände repräsentieren, auf mehrere Familien,
   - Ausführen einer ersten Grobsortierung der Parameterfamilien nach der Größenordnung der Hauptparameter der Hauptfamilien,
   - Entfernen der in bezug auf die gemessenen Eigenschaften der zu erkennenden Gegenstände am wenigsten wahrscheinlichen Lösungen in jeder Familie und
   - Klassieren der verbleibenden Lösungen in der Reihenfolge der Wahrscheinlichkeiten, um wenigstens eine der wahrscheinlichsten beizubehalten,

   gekennzeichnet durch die Tatsache, daß die Wahrscheinlichkeit eine globale Wahrscheinlichkeit ist, die gleich dem Produkt der auf die verschiedenen Parameterfamilien bezogenen Partialwahrscheinlichkeiten ist, wobei eine Partialwahrscheinlichkeit $V_p$ gegeben ist durch:

   $$V_p \;=\; \pi_j \left( C(j)^{K(j)} \right) N(j)$$

   wobei

   "j" der Untersuchungsindex der Parameter ist, die der Familie zugeordnet sind, wofür $V_p$ die Wahrscheinlichkeit ist,
   C(j) eine Größe ist, die, wenn sie sich Eins annähert, die zunehmende Nähe des Parameters zu demjenigen, der in einer Bibliothek gespeichert ist, wiedergibt,
   N(j) ein Koeffizient ist, der die Festlegung des Gewichts des Parameters "j" in der Identifizierung ermöglicht,
   K(j) ein Koeffizient ist, der für die Werte der Parameter, deren Genauigkeit als Prozentsatz bekannt ist, gleich 1 ist, und zum Wert der Parameter proportional ist, wenn deren Genauigkeit absolut bekannt ist.

2. Verfahren nach Anspruch 1, gekennzeichnet durch die Tatsache, daß für den Vergleich eines qualitativen oder diskreten Parameters der Koeffizient C(j) gleich 1 ist, wenn eine Entsprechung vorliegt, und andernfalls kleiner als 1 ist.

3. Verfahren nach Anspruch 1, gekennzeichnet durch die Tatsache, daß im Fall der Nähe eines Parametermeßwerts M zu einem Bibliothekswert VB der Koeffizient C(j) gleich

   $$\inf\!\left( \frac{M}{VB} \,,\, \frac{VB}{M} \right)$$

   ist.

4. Verfahren nach Anspruch 1, gekennzeichnet durch die Tatsache, daß im Fall der Nähe eines Parametermeßwerts M zu einem möglichen Bibliotheksbereich VBmin, VBmax der Koeffizient C(j) gleich

$$inf\left(\frac{M}{VB\ min}\ ,\ \frac{VB\ max}{M}\ ,\ 1\right)$$

ist.

5. Verfahren nach Anspruch 1, gekennzeichnet durch die Tatsache, daß im Fall der Nähe der extremen gemessenen Parameterwerte Mmin, Mmax zu einem möglichen Bereich einer Bibliothek VBmin, VBmax der Koeffizient C(j) gleich

$$inf\left(\frac{Mmin}{VBmin}\ ,\ \frac{VBmax}{Mmax}\ ,\ 1\right)$$

ist.

6. Verfahren nach einem der vorangehenden Ansprüche, gekennzeichnet durch die Tatsache, daß dann, wenn ein untersuchter Parameter einen globalen Wahrscheinlichkeitsschwellenwert erheblich übersteigt, dieser Schwellenwert für die Untersuchung der folgenden Parameter erhöht wird.

7. Verfahren nach einem der vorangehenden Ansprüche für die Erkennung von Radaren, gekennzeichnet durch die Tatsache, daß die Parameterfamilien in der Anzahl Vier vorliegen und auf die Frequenz, die Impulsbreite, die Ankunftszeittastung und die Strahlschwenkung bezogen sind.

## Claims

1. Method for the fast recognition of objects liable to form part of a collection of a large number of known objects with different characteristics, consisting

   - in measuring parameters representing the main characteristics of these known objects,
   - in compiling a library containing the characteristics of these known objects,
   - in measuring the characteristics of each of the objects to be recognized,
   - in comparing the characteristics thus measured of the objects to be recognized with the characteristics stored in the library with a view to identifying each of the objects to be recognized, according to a procedure consisting in carrying out, with the aid of a processor, the following steps:
   - distributing, into several classes, the measured parameters representing the main characteristics of the known objects,
   - carrying out a first rough sorting of the classes of parameters, taking account of the order of magnitude of the main parameters of the main classes,
   - eliminating from each class the solutions which are least likely with respect to the measured characteristics of the objects to be recognized, and
   - ranking the remaining solutions in order of likelihood so as to pick one at least of the most likely,

   characterized in that the likelihood is an overall likelihood which is equal to the product of the partial likelihoods relating to the various classes of parameters, a partial likelihood $V_p$ being given by:

   $$V_p = \pi_j\ (C(j)^{(K(j))})\ N(j)$$

   where "j" is the index of exploration of the parameters associated with the class for which Vp is the likelihood, C(j) is a quantity which signifies, as it approaches unity, the increasing closeness of the parameter to that stored in a library,
   N(j) is a coefficient making it possible to fix the weight of the parameter "j" in the identification,
   K(j) is a coefficient equal to 1 for the values of parameters whose accuracy is known as a percentage, and proportional to the value of the parameters when their absolute accuracy is known.

2. Method according to Claim 1, characterized in that, for the comparison of a qualitative or discrete parameter, the coefficient C(j) is equal to 1 if there is correspondence, otherwise it is less than 1.

3. Method according to Claim 1, characterized in that, in the case of the closeness of a parameter measurement M to a library value LV, the coefficient C(j) is equal to

$$\inf\left(\frac{M}{LV}, \frac{LV}{M}\right)$$

4. Method according to Claim 1, characterized in that, in the case of the closeness of a parameter measurement M to a possible range from a library LVmin, LVmax, the coefficient C(j) is equal to

$$\inf\left(\frac{M}{LVmin}, \frac{LVmax}{M}, 1\right)$$

5. Method according to Claim 1, characterized in that, in the case of the closeness of the extreme measured parameter values Mmin, Mmax to a possible range from a library LVmin, LVmax, the coefficient C(j) is equal to

$$\inf\left(\frac{Mmin}{LVmin}, \frac{LVmax}{Mmax}, 1\right)$$

6. Method according to one of the preceding claims, characterized in that when an examined parameter goes significantly beyond a predetermined threshold of overall likelihood, this threshold is raised for the examination of the following parameters.

7. Method according to one of the preceding claims, for the recognition of radars, characterized in that the classes of parameters are four in number and relate respectively to frequency, pulse width, modulation of the time of arrival, and to the scan.